(19) Europäisches Patentamt
European Patent Office
Office européen des brevets

(11) **EP 3 805 455 A1**

(12) **EUROPEAN PATENT APPLICATION**
published in accordance with Art. 153(4) EPC

(43) Date of publication:
**14.04.2021 Bulletin 2021/15**

(21) Application number: **19811891.1**

(22) Date of filing: **17.05.2019**

(51) Int Cl.:
**D21H 17/25** (2006.01)    **D21H 21/18** (2006.01)
**B32B 29/02** (2006.01)    **B32B 7/12** (2006.01)
**B82Y 30/00** (2011.01)

(86) International application number:
**PCT/BR2019/050181**

(87) International publication number:
**WO 2019/227186 (05.12.2019 Gazette 2019/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.05.2018 BR 102018010860**

(71) Applicant: **Klabin S.A.**
**04538-132 São Paulo (BR)**

(72) Inventors:
• **PEREIRA DAMÁSIO, Renato Augusto**
  **84275-000 Telêmaco Borba (BR)**
• **COELHO DOS SANTOS MUGUET SOARES,
  Marcelo**
  **84275-000 Telêmaco Borba (BR)**

(74) Representative: **Tiburzi, Andrea et al**
**Barzanò & Zanardo Roma S.p.A.**
**Via Piemonte 26**
**00187 Roma (IT)**

(54) **PAPER AND PROCESS FOR MANUFACTURING PAPER USING MICROFIBRILLATED CELLULOSE BETWEEN THE LAYERS THEREOF**

(57) The present invention relates to a multilaminar paper containing cellulosic fibers and to a process for making the same, comprising bonding different layers of such paper with the addition of 0.5 to 1.5 g/m² of microfibrillated cellulose (MFC) with a preferred mean diameter of less than 250 nanometers, generating a paper where starch has been completely replaced and with a final grammage ranging from 60 to 440 g/m² and with improved mechanical strength properties using smaller amounts of raw material.

MFC between layers (internal bonding)

Figure 1

EP 3 805 455 A1

# Description

## Technical Field

The present invention relates to a multilaminar paper containing cellulosic fibers and to a manufacturing process thereof comprising bonding between different layers of the paper with the addition of microfibrillated cellulose (MFC), generating a paper with special grammage and improved mechanical strength properties, using smaller amounts of raw material. The present invention relates to the field of papermaking.

## Background of the Invention

Concerns about the environment gains prominence every day in the countries' agenda, which create laws to regulate the generation of waste and their destination. All this work derives from the awareness that it is necessary to use raw materials from renewable sources in industrial production processes.

The pulp and paper production chain is characterized by a high degree of investment and has significant presence in scale economy, since it is present from forest exploitation to commercialization.

The location of factories is linked to the concentration of forest assets, and there is a strong dependence between the production of raw material and the industrial process.

Starch is an example of a binder applied between the paper cardboard and is industrially used. However, it is possible to find solutions derived from the cellulose fiber itself and that can exert the same function, thus conferring better strength properties to the paperboard.

Thus, a papermaking process that decreases the dependence and extraction of raw material and confers mechanical strength to paper, produced with the use of bio refined MFC, that is, the integration of the MFC produced in the papermaking process, instead of the use of polymers external to the manufacturing process, reduces losses, making the process less expensive and less harmful to the environment.

WO 2016/097964 relates to a process for producing a coated article in package manufacturing, said process comprising an article containing cellulosic fibers, such as paper or cardboard, and the application of a coating solution containing MFC in the concentration of at least 5 $g/m^2$ on this article, with a subsequent dehydration step. Although the grammage of the paper produced according to the teachings of this prior art document is not informed, the process developed herein uses an amount of MFC below the disclosed minimum value, which evidences a state of the art problem, since it uses larger amounts of raw material.

WO 2016/185332 relates to a method of applying a coating layer comprising a blend of microfibrillated polysaccharides, such as MFC, associated with a diluent, both applied to a paper or cardboard, to impart improved properties. It is additionally stated that such application may be made in one or two paper layers as a continuous film. The grammage of the paper produced and the amount of MFC applied are not reported, but the process described does not require the application of a diluent, which also uses larger amounts of materials.

WO 2014/029917 discloses a papermaking process using multilayer technique and starting from an aqueous composition comprising nanofibrillated cellulose in a concentration from 0.1 to 5%, where MFC is mentioned, together with a strength additive, like a cationic starch, both fed in one or two intermediate layers and increasing the internal strength. The process described herein fully replaces the starch by MFC and does not use a strength additive, and additionally, the starch used is non-cationic.

Although some prior art documents refer to the use of MFC in a papermaking process, none of them describe the use of MFC without the need for adjuvant substances or other polymers at considerable amount.

This process of bonding between paper layers using MFC and producing a final paper with improved properties, of the present invention, comprises adding 0.5 $g/m^2$ to 1.5 $g/m^2$ of microfibrillated cellulose in a paper production line with grammage ranging from 60 $g/m^2$ to 440 $g/m^2$ , thus solving the technical problem of the previous teaching, as it does not require diluents, additives or starch in considerable amount. Thus, the present process achieves a paper with higher strength and, consequently, lower grammage, applying MFC.

## Summary of the Invention

In a first aspect, the present invention describes a multilaminar paper containing microfibrillated cellulose and exhibiting improved grammage and strength.

Thus, it is a first object of the present invention having a multilaminar paper containing microfibrillated cellulose fibers between its layers and with special grammage.

In a preferred embodiment, the amount of microfibrillated cellulose present between the paper layers is 0.5 to 1.5 $g/m^2$ and the paper grammage ranges from 60 to 440 $g/m^2$.

Another characteristic of the invention is that the average diameter size of the microfibrillated cellulose fibers used in the paper is less than 250 nanometers.

Another characteristic of the invention is that the paper produced is of board or corrugated type.

In a second aspect, the present invention describes a multilaminar papermaking process using microfibrillated cellulose fibers.

A second object of the present invention is a multilaminar papermaking process comprising the addition of microfibrillated cellulose fibers between its layers.

In one preferred embodiment, the addition of microfibrillated cellulose fibers between the paper layers made at a concentration of 0.5 to 1.5 g/m² replaces up to 100% of the starch between the paper layers.

Another characteristic of the invention is the addition of microfibrillated cellulose fibers between the paper layers at a flow rate of up to 200 L/min.

These and other objects of the present invention will be detailed in the figures and description below.

**Brief Description of the Figures**

Figure 1 shows a schematic representation of the paper layers where MFC is applied for bonding them.

Figure 2 shows, by optical microscopy, the distribution of the cellulose fiber diameter bands of the Pinus long fiber pulp in micrometers, used during the production processing step of the MFC.

Figure 3 shows, by optical microscopy, the distribution of the cellulose fiber diameter bands of the Pinus long fiber pulp in micrometers, used during the chemical-enzymatic processing step of the MFC.

Figure 4 shows, by optical microscopy, the distribution of the cellulose fiber diameter bands of the Pinus long fiber pulp after the 1st grinding in micrometers, carried out in the production processing step of the MFC.

Figure 5 shows, by optical microscopy, the distribution of the cellulose fiber diameter bands of the Pinus long fiber pulp after the 2nd grinding at 0.25 g/l of pulp concentration and in nanometers, carried out in the production step of the MFC.

Figure 6 shows, by optical microscopy, the distribution of the cellulose fiber diameter bands of the Pinus long fiber pulp after the 2nd grinding at 0.05 g/l of pulp concentration and in nanometers, carried out in the production step of the MFC.

Figure 7 shows, by optical microscopy, the distribution of the cellulose fiber diameter bands of the Pinus long fiber pulp after the 2nd grinding at 0.025 g/l of pulp concentration and in nanometers, carried out in the production step of the MFC.

Figure 8 shows the different zeta potentials in 10 mM KCl solution for each MFC production step in comparison with distilled and deionized water.

Figure 9 shows the sedimentation grades after 24 hours at rest for pulp slurries at concentration of 0.5 g/l at different steps of the MFC production process.

Figure 10 shows the electron micrographs in increasing zoom (50, 10 and 5 $\mu$m) of MFC microparticles produced by spray-drying after the 1st grinding, performed during the processing stage of MFC production.

Figure 11 shows the electron micrographs in increasing zoom (50, 11 and 2 $\mu$m) of MFC microparticles produced by spray-drying after the 2st grinding, performed during the processing stage of MFC production.

Figure 12 shows four transmission electron microscopy images of the same region of a short microfibrillated cellulose fiber in increasing zoom (A = 2 $\mu$m, B = 1 $\mu$m and C and D = 500 nm).

Figure 13 shows four transmission electron microscopy images of the same region of a long microfibrillated cellulose fiber in increasing zoom (A and B = 2 $\mu$m and C and D = 1000 nm).

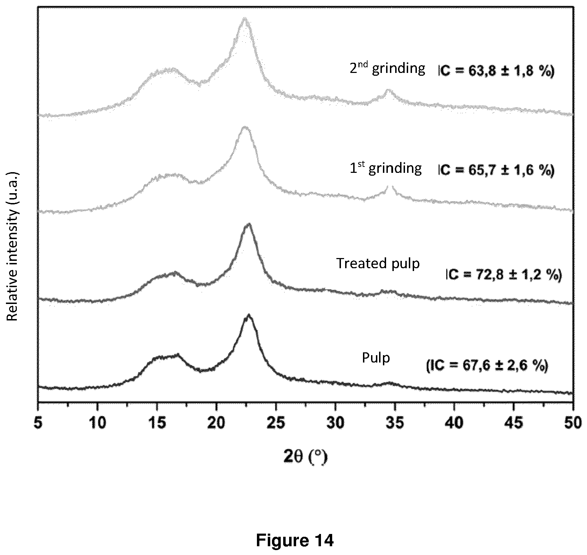

Figure 14 shows a comparative graph of X-ray diffraction (relative intensity x 2-theta) at different stages of the MFC production process.

Figure 15 shows operational control parameters distributed for each MFC production step in 3 graphs, showing: pH, viscosity and turbidity information.

Figure 16 shows the operational control parameter time of dynamic drainage per pulp volume during each step of MFC production.

Figure 17 shows the graph of the mechanical physical property *Scott Bond* calculated on LTK 170 g/m² paper.

Figure 18 shows the graph of the mechanical physical property *Ring Crush Test* (RCT) calculated on LTK 170 g/m² paper.

Figure 19 shows the graph of the mechanical physical property *Corrugating Medium Test* (CMT) calculated on LTK 170 g/m² paper.

Figure 20 shows the graph of the mechanical physical property tensile index (IT) calculated on LTK 170 g/m² paper.

Figure 21 shows the graph of the mechanical physical property stretching, calculated on LTK 170 g/m² paper.

Figure 22 shows the graph of the mechanical physical property *Tensile Energy Absorption [T]* calculated on LTK

170 g/m$^2$ paper.

Figure 23 shows the calculated arithmetic mean of the mechanical physical property *Concora Medium Test* (CMT) for starch and MFC applications and per production batch, where the target is 300 N and the lower limit is 270 N.

Figure 24 shows the calculated arithmetic mean of the mechanical physical property *Scott Bond* for starch and MFC applications and per production batch, where the target is 300 J/m$^2$ and the lower limit is 200 J/m$^2$.

Figure 25 shows the calculated arithmetic mean of the mechanical physical property *Ring Crush Test* (RCT) for starch and MFC applications and per production batch, where the target is 2.10 kN/m and the lower limit is 1.89 kN/m.

Figure 26 shows the calculated arithmetic mean of the mechanical physical property *bursting resistance* for starch and MFC applications and per production batch.

Figure 27 shows the calculated arithmetic mean of the mechanical physical property *resistance to airflow for* starch and MFC applications and per production batch.

Figure 28 shows a graph of the paper grammage (g/m$^2$) variation on paper rolls with applied MFC (rolls 29 to 31).

Figure 29 shows a graph of the variation of the trivacuum in the forming table for the production of paper rolls with applied MFC (rolls 29 to 31).

Figure 30 shows a graph of the paper moisture (%) variation on paper rolls with applied MFC (rolls 29 to 31) .

Figure 31 shows a graph for the steam consumption variation (Tv/Tp) for producing paper rolls with applied MFC (rolls 29 to 31);

Figure 32 shows a schematic spraying application from the MFC sprinklers/sprayers (2) between the paper layers A and B or in only one layer A or B, depending on the application angle (1).

## Detailed Description of the Invention

The examples shown herein are intended only to illustrate some of the numerous embodiments of the present invention, and are not to be construed as limiting the scope of the present invention, but merely to exemplify the large number of possible embodiments.

Minor modifications in amounts or parameters that achieve the results proposed by the present invention should be regarded as within the scope of the invention.

Microfibrillated Cellulose (MFC)

It is known that microfibrillated cellulose, microfibri-lated cellulose, nanofibrillated cellulose or even nanofibers or nanocellulose are terms commonly found which refer to the entanglement of cellulosic fibrils with diameters or one of their dimensions comprised in the range of less than 1000 nm, and it has amorphous and crystalline zones composing its structure. MFC is characterized as a type of cellulose in which the microfibers are split into a larger number of microfibrils or even finer fibrils. This creates an increased surface area, granting new characteristics to the product. MFC is used in this invention primarily as a dry strength agent, for internal paper bonding and as a modifier of the physical paper structure.

MFC is typically derived from wood sources and is one of the most sustainable alternatives on the market. However, it can be produced from any cellulosic fiber source, be it mechanical, non-bleached and bleached, in addition to any biomass source derived from wood and non-wood.

The MFC surface area is the special characteristic of this substance: it is possible, with only one gram of MFC, to cover up to 200 m$^2$ of physical space. This characteristic is due to the large number of hydroxyl groups (-OH) available in microfibers, which are highly hydrophilic and capture near water. An MFC microfiber is capable of capturing 40 times more water than its own weight.

Since MFC is a highly hydrophilic material, it can act as an advanced rheology modifier, providing very interesting spray characteristics and exceptionally high viscosity at rest. MFC is known for its shearing and non-Newtonian behavior, and it also shows potential as a stabilizer, especially in stabilizing emulsions (water in oil or oil in water).

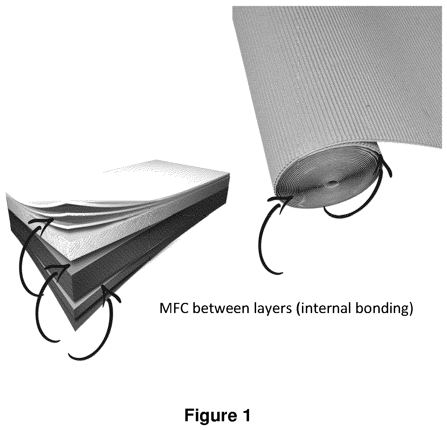

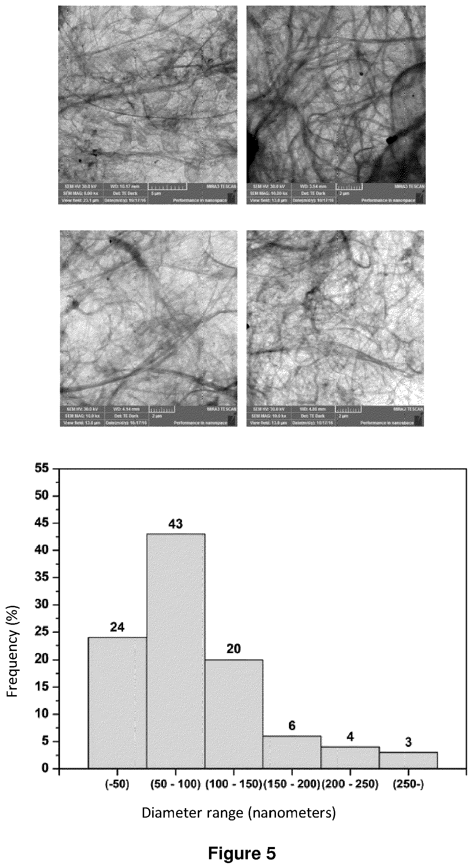

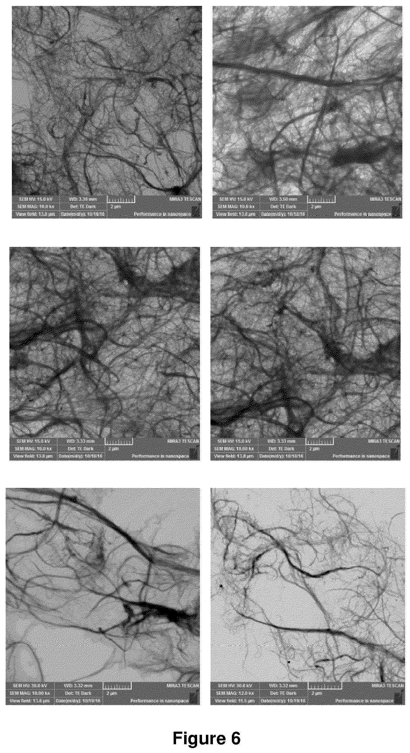

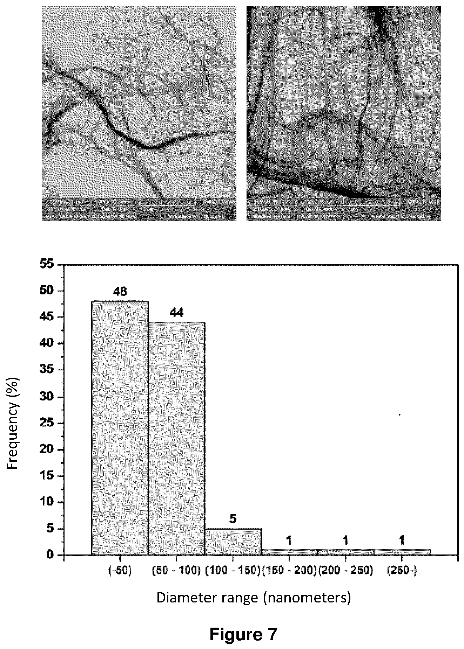

It can be noted in figures 5-7 that MFC is a large network of bonds between the paper layers, ensuring that the fiber-MFC-fiber bond interface between the paper layers (figure 1) expresses its maximum potential due to the OH groups exposed and its high surface area. The MFC fills both the macro and the microporosity of the paper produced, changing the bond structure between the layers and forming a perfect bond.

The MFC multifunctionality also allows it to partially adopt additives and stabilizing ingredients, like surfactants. Moreover, MFC is potentially a strength additive. Due to these functionalities, there has been an increasing interest in the use of MFC in applications such as coatings, adhesives, electronics, cosmetics and many others.

The MFC microfiber size is also important in determining its functionality. The increase of the microfiber bonding network has beneficial effects on the tensile, elasticity and resistance properties of the composites in wood and paper.

MFC production

According to the present invention, the production of MFC can be subdivided into 5 major steps:

1. 1st dilution;
2. treatment;
3. processing;
4. 2nd dilution; and
5. storage.

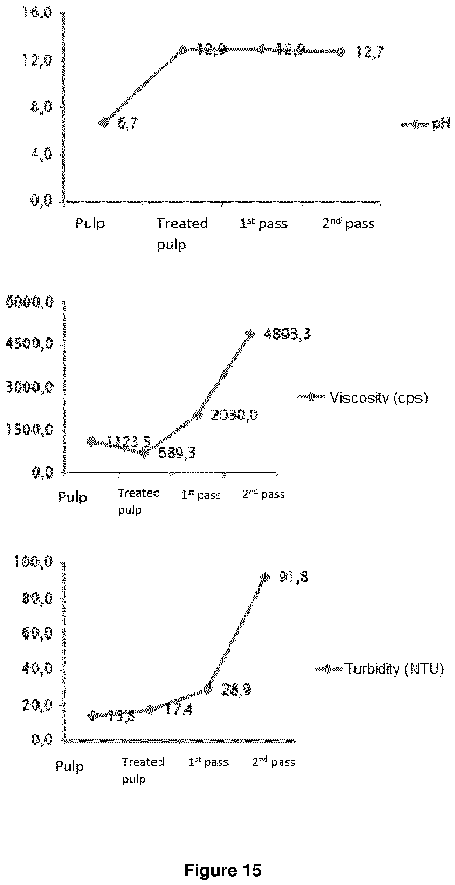

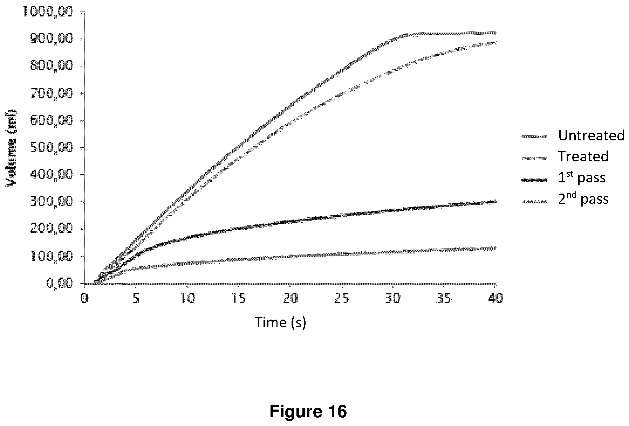

Figures 15 and 16 show parameters that must be monitored throughout the MFC productive process, such as pH, viscosity, turbidity and pulp drainage time.

The first step consists in the dilution of the bleached or unbleached kraft pulp to 2% to 30% of consistency, the lower being the most preferred for MFC processing.

The second step is the chemical-enzymatic treatment. In this step, the preparation of the pulp for processing takes place. First, the pH is adjusted to 6.0 using aluminum sulphate ($Al_2(SO_4)_3$). The pulp in neutral medium is heated to 35-40 °C for 50-60 minutes, and then treated with the endoglucanase enzyme in the ratio of 125g of enzyme per ton of dry pulp. The product is kept dispersed for 25 minutes in a cowles shaker. After this period, the enzymatic action is halted by adjusting the pH to 13-14 with liquid soda (sodium hydroxide, NaOH) at a dosage of approximately 200g per ton of pulp.

The third step is the processing step, where the pulp is transferred to a vertical mechanical mill through a pump, and processed. The mill comprises aluminum oxide stone ($Al_2O_3$) at 2% cSt (*Consistency*). The process is carried out twice and it must be noted that, after the 1st grinding, whole fibers can still be visualized, but not in the second grinding, thus evidencing the micro/nano size scale of the fibers. The sizes of the microfibers produced after this step are shown in table 1, while table 2 shows the different characterization parameters of fibers at 2% cst.

**Table 1** - Pulp diameter range and frequency and of cellulosic microfibrills per production step:

| Sample | Diameter range | Frequency (%) |
|---|---|---|
| Pulp | (15-40) $\mu$m (-25 $\mu$m) | 90 |
| | | 47 |
| Treated pulp | | 81 |
| | | 38 |
| 1st grinding | | 86 |
| | | 46 |
| 2nd grinding (0.25 g/1) | (50-250) $\mu$m (-50 $\mu$m) | 73 |
| | | 24 |
| 2nd grinding (0.05 g/1) | | 76 |
| | | 23 |
| 2nd grinding (0.025 g/1) | | 51 |
| | | 48 |

**Table 2** - Characterization parameters of the pulp and microfibers at 2% cSt:

| Parameter/Phase | Pulp | Treated pulp | 1st pass. | 2nd pass. |
|---|---|---|---|---|
| pH | 6.7 | 12.9 | 12.9 | 12.7 |
| Viscosity (cps) | 1123.5 | 689.3 | 2030.0 | 4893.3 |
| Turbidity | 13.8 | 17.4 | 28.9 | 91.8 |

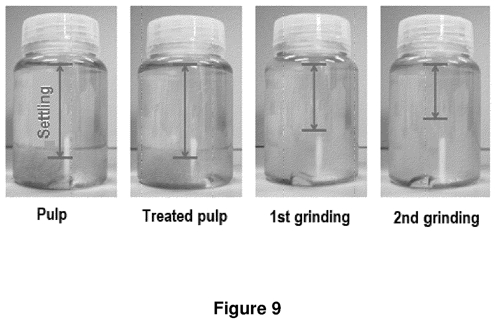

The fourth step is the step of diluting the treated and grounded pulp in a tank to a consistency of 0.1 to 1.0% cSt, preferably 0.8% cSt, with the pulp entering in and exiting from the filter via openings, and stirring up to 60 min in reservoirs with engine-driven non-cutting blades, in order to ensure the formation of a homogeneous suspension of MFC without the formation of flakes and to avoid sedimentation. The formation of flakes or small lumps of MFC may cause potential clogging of the sprinklers/aspersion/spray nozzles. The pulp is subsequently filtered through a 0.05 mm filter. The difference in the sedimentation of MFC fibers at each production step - showing the reduction of fiber size - can be seen in Figure 9.

The fifth and final step is the storage step where, upon stirring, a homogeneous MFC suspension is formed, which can be transported or pumped through the lines/pipes or tank trucks to the storage tank which supplies the application line of the aspersion/spray nozzles.

The calculation of the theoretical energy consumption of the production of CFMs can be carried out using the following formula:

$$C = \frac{v.i.\sqrt{3}.fp}{P}$$

Where v is the tension (V), i is the mean current (A), fp is the power factor of a motor in horses (cv) and P is the production/hour (dry kg). The total energy expenditure is estimated at 7075.6 KWh/t.

Characterization of the MFC fibers used between the paper layers

In this invention, the MFC containing a mixture of microfibers with different sizes was evaluated with a view to total raw starch replacement, improving the gluing between the paper layers even under wet conditions and increasing the strength of the product formed.

The application of two types of MFCs - containing both long and short fibers - presented improvements for several physical and mechanical properties when compared to the application of starch between the paper layers and without application of other binder polymers. Thus, the replacement of starch by MFC presents great potential for industrial application.

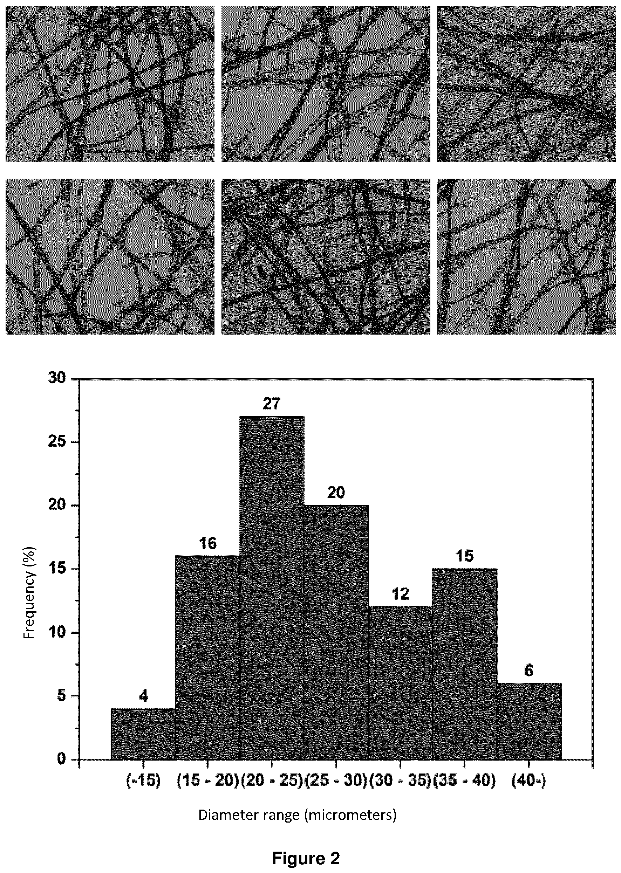

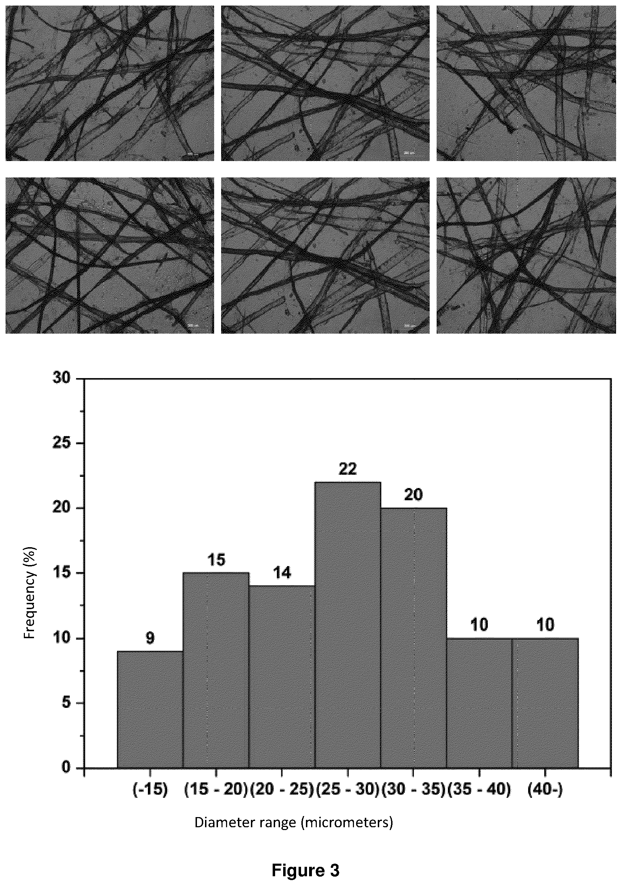

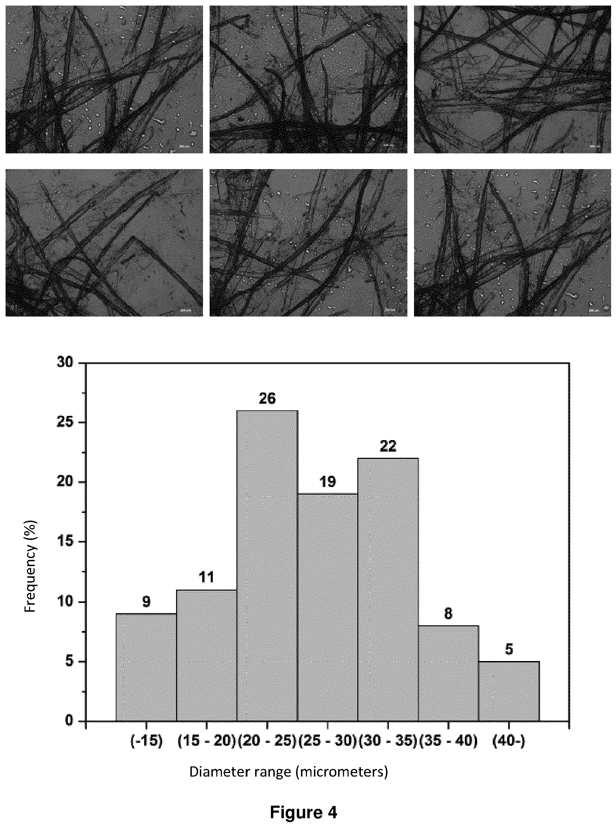

Figures 2 to 7 show images of cellulose pulp and cellulose microfibers by optical and electron microscopy, evidencing the distribution of the fiber size in micrometers and nanometers.

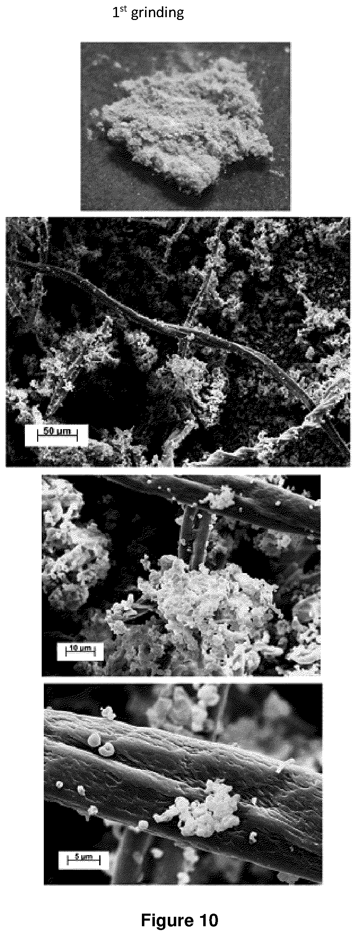

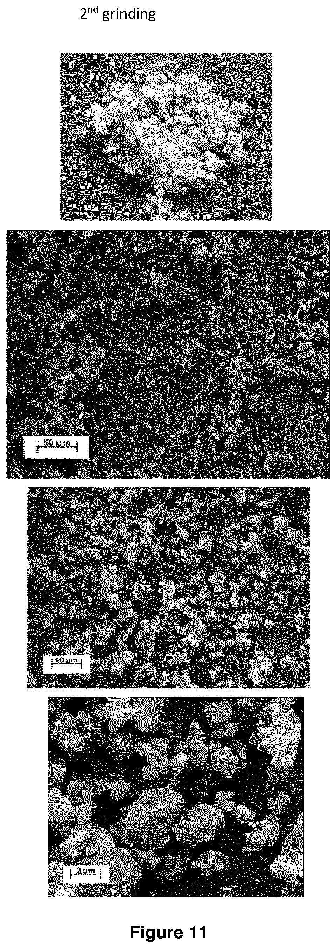

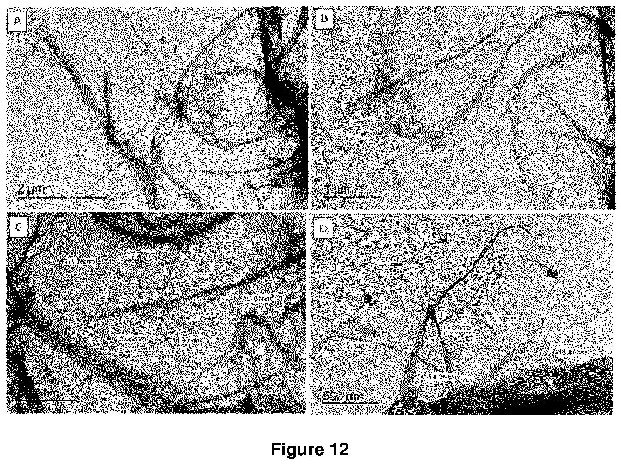

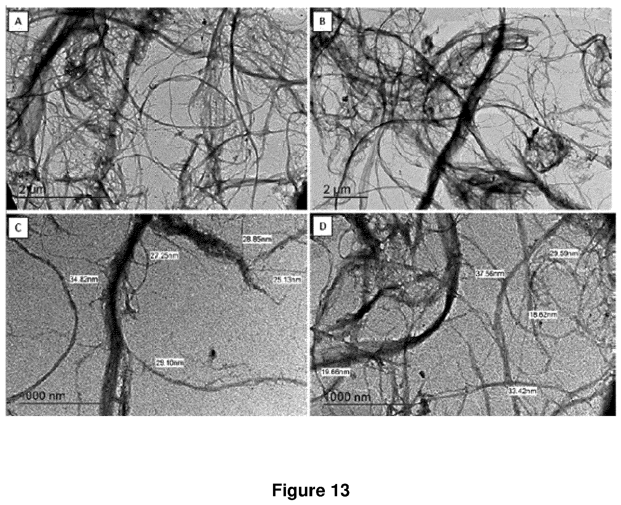

Figures 10 to 13 show cellulose microfiber images obtained by electron microscopy/micrographs containing cellulose microfiber agglomerates with a diameter of less than 100 nm and lengths in the micrometer range. In figure 12, with short-fiber samples, the mean diameter was around 17.00 nm, while in figure 13, containing long-fiber MFC, the mean diameter was higher than the short-fiber sample, ranging from 19.00 to 57.00 nm and with an average value of 33.48 nm.

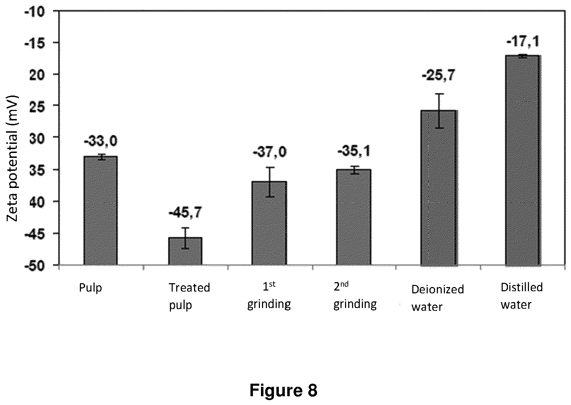

As for the surface charge of the MFCs used, as shown in figure 8, the zeta potential values obtained were -15.77 and -29.85, respectively, for the short fiber MFC and long fiber MFC samples. The zeta potential represents the surface charge of the particles. Larger values result in more stable suspensions, whereas values considered low indicate that particles tend to cluster very easily. For modulus values greater than 25 mV, the suspension may be considered stable, that is, without tendency to flocculate.

Physical and mechanical tests for papers containing MFCs between their layers

Currently, the paperboard and corrugated paper production process uses starch as a bonding agent between layers, which allows the achievement of the specifications defined for these papers.

It is an object of the present invention to apply MFC between the layers of paperboards and corrugated paper instead of starch.

Thus, the application of MFC between the layers of paperboard and corrugated paper presented gains for several physical and mechanical properties, such as *Scott Bond,* CMT and RCT, when compared to the application of starch.

The *Scott Bond* test is used to determine the internal strength of the paper. This test measures the energy required to delaminate a multilayer structure. In the case of paper, the internal bond strength refers to the bonding strength of these fibrous layers, while *Scott Bond* refers to the total strength absorbed required to separate these layers. The results are shown in $J/m^2$.

CMT, or *Corrugating Medium Test*, measures the compressive strength of a corrugated medium and provides a means of estimating the potential compressive strength of a corrugated paper to the flat state. CMT allows the evaluation of a corrugated medium before it is manufactured in a composite article - such as the cellulosic microfibers prior to papermaking - and may, therefore, serve as a basis for evaluating the manufacturing efficiency.

RCT, or *Ring Crush Test,* similar to CMT, is used to determine the compressive strength of a paper strip formed in a ring shape with a standardized length and width. The results of this test are highly dependent on the appropriate sample preparation. The specimen and the test apparatus shall be exactly parallel, in order to ensure an accurate determination of the ring compressive force.

Other tests of physical and mechanical properties, such as tensile strength (force required until the paper is broken), elongation or stretching (another measure of force required until the paper is broken), *Tensile Energy Absorption* (TEA) (force needed to continue paper breakage until total separation) and resistance to airflow were performed, and also evidenced improvements. It shall be noted that some tests are measured as indexes, which is the quotient of the strength analyzed by the paper weight.

Viscosity can be used to indirectly assess the degree of polymerization of the cellulose chains and to detect degradation of cellulose resulting from the pulping, delignification and mechanical defibrillation processes. The average values of the MFC viscosity found for the treatments of the short fiber and long fiber samples were 2.90 and 9.37 mPa.s, respectively. Application of MFC to the 0.8% cSt layers showed viscosity of 409 cP (centipoise) and pH 7.1.

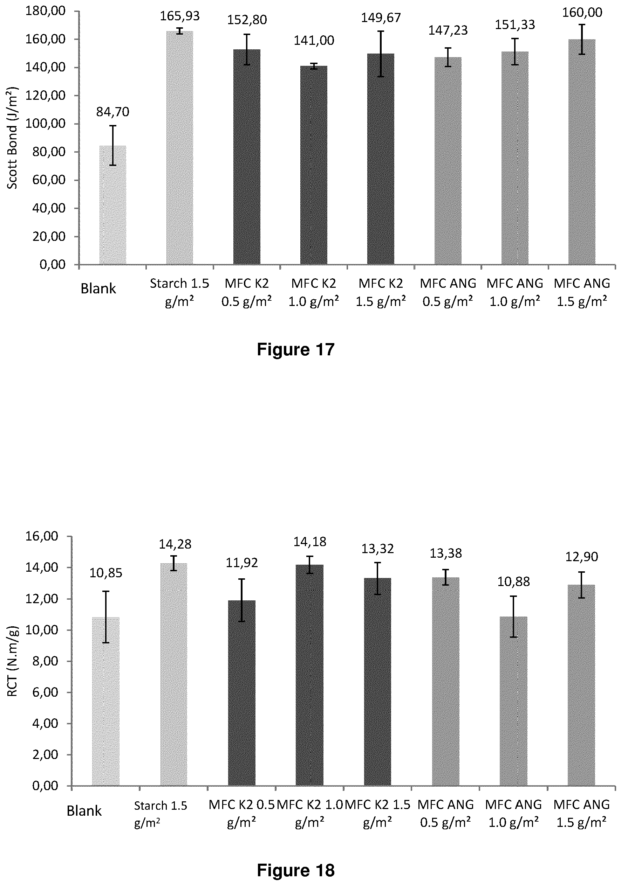

Figures 17 to 22 show the results obtained after evaluating the properties of corrugated paper with a grammage at 170 $g/m^2$ and not only with the addition of cellulose microfibers, thus allowing a comparison with the base case. Since the amount of MFC used between the paper layers ranges from 0.5 to 1.5 $g/m^2$ , it is noted, only for comparison purposes, that the bonding between the layers is evaluated without binders (Blank), with starch between the layers (1.5 $g/m^2$), with long fiber MFC (dark blue, which presented better results at 0.5, 1 and 1.5 $g/m^2$) and with short fiber MFC (pink, 0.5, 1 and 1.5 $g/m^2$).

The *Scott Bond test* measured the shearing strength between the paper layers, in this case, with starch and MFCs (Figure 17). It is possible to observe gains greater than 60 points for this property when compared to paper without addition of binders between layers (blank), reaching 80 points for the lowest applied MFC load (0.5 $g/m^2$) when compared to blank. It is worth noting that close values were observed for this property for the two types of CFMs applied.

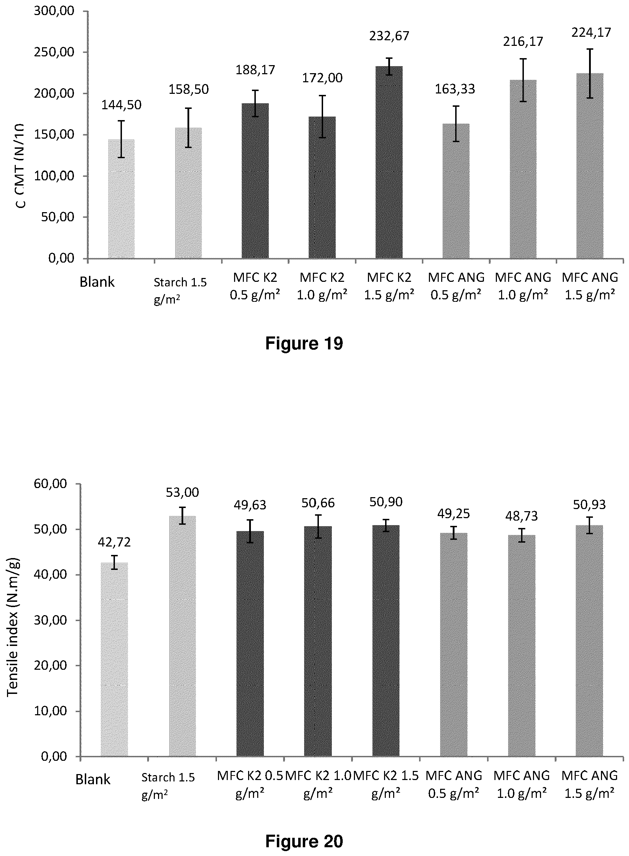

As to RCT and CMT, it is verified that the addition of binders between the paper layers increases the values of these properties (Figures 18 and 19). There were maintenance of the RCT values for the 0.5 and 1.0 $g/m^2$ loads of MFC in relation to the application of 1.5 $g/m^2$ of starch (figure 18), while substantial gains for CMT occur with all MFC applied loads, whether from short or long microfiber, with values above those found for starch application at 1.5 $g/m^2$ (figure 19).

The values of the tensile index (Figure 20) were maintained for the applications of MFC and starch. MFC provided tensile strength gains only when compared to the blank. It is known that, due to the high availability of binder terminals (-OH), MFC is able to form nets between the microfibers and fibers present in the medium, thus providing gains in various paper properties.

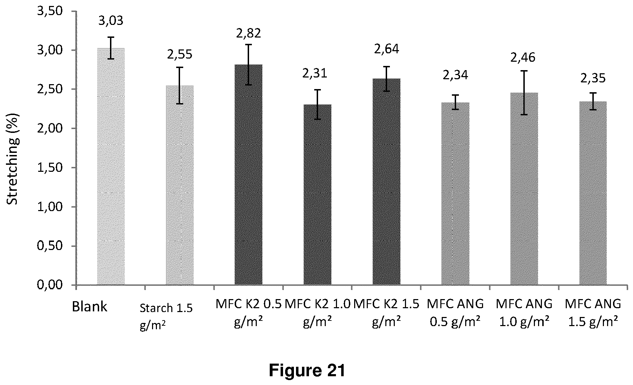

For the stretching property (figure 21) there was an increase in the values found for the applications of long fiber MFC and a reduction for short fiber applications in relation to starch, thus evidencing that the long fibers have higher elasticity than the fibers with smaller diameter. However, when compared to Blank, all values found are lower. This shows that the adhesion provided by an adhesive additive - starch or MFC - is strong enough to favor breaking over stretching.

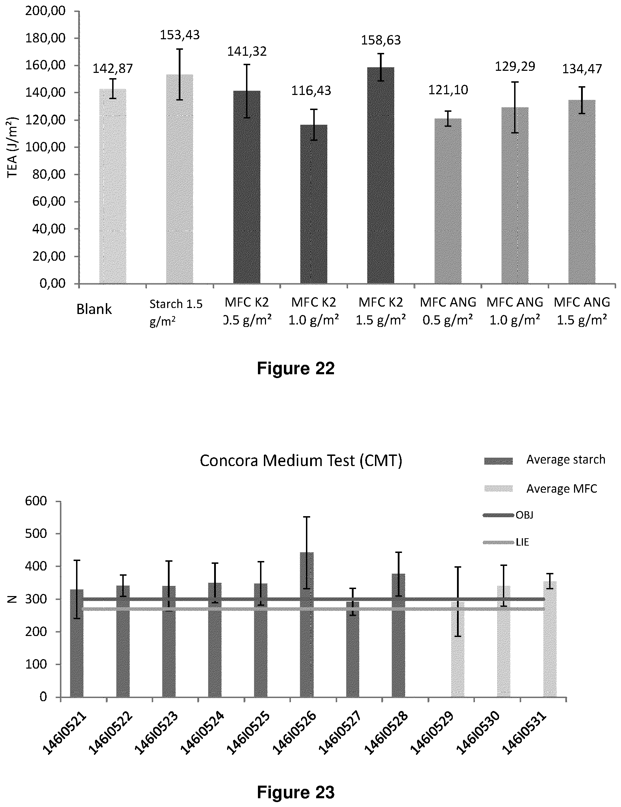

In order to corroborate this understanding, the TEA property (figure 22), which measures the force required for paper breakage, showed equal results for the blank and MFC short fibers, but higher values for the long fibers and starch.

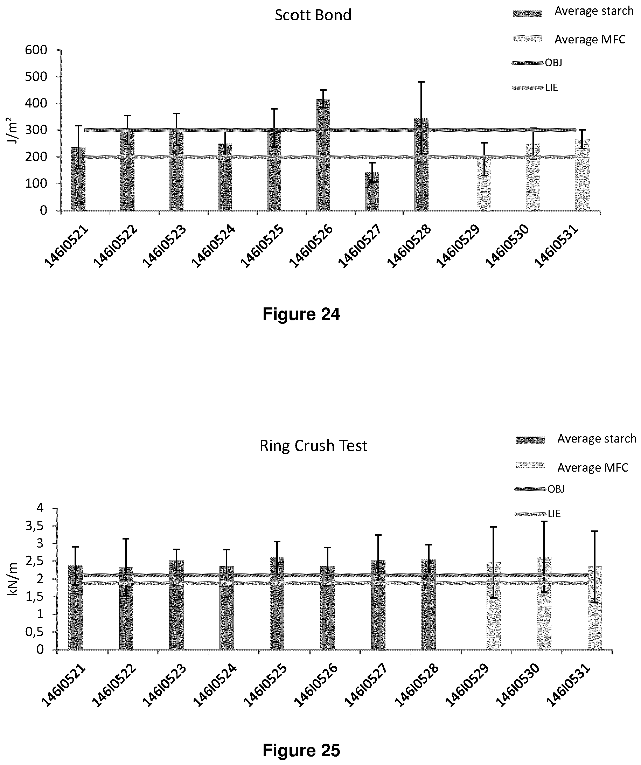

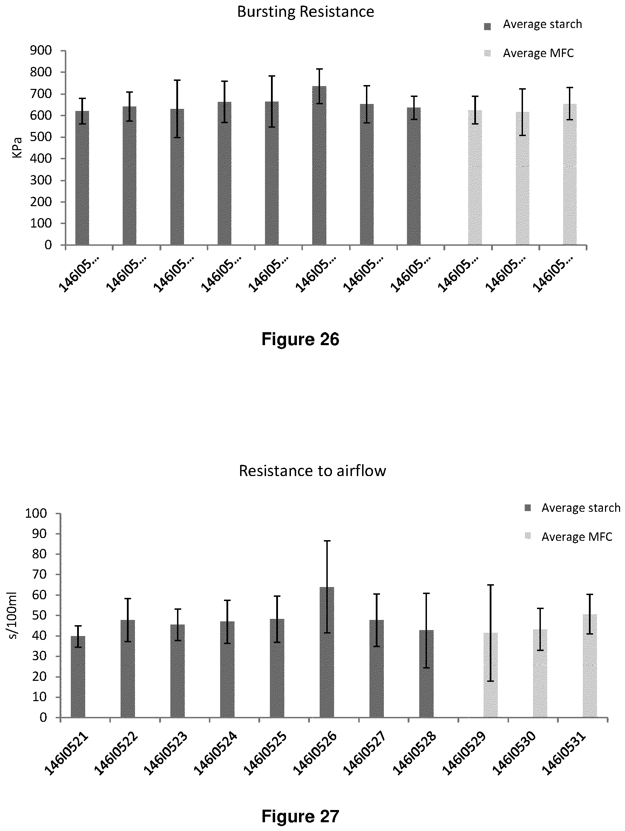

Figures 23 to 27 show the mean of the results obtained in the tests of physical and mechanical properties, which were carried out with batches of papers produced with MFC between their layers. Periods with starch application (dark blue bars) and periods with MFC application (light blue bars) replacing all starch are indicated. The results of the tests were satisfactory and met specifications, and were even better in cases of application of the maximum load of MFC between layers (0.7 $g/m^2$).

Therefore, it is possible to observe remarkable gains in all physical and mechanical properties with the addition of MFC.

Industrial tests for papers containing MFCs between their layers

To evaluate the effect of the application of MFC in industrial scale, the application of different products in different batches was set forth. It is known that the application of starch in all corrugated papers may vary, and in the test, from 2.94 $g/m^2$ to 3.58 $g/m^2$ of starch applied between the layers. Thus, the application of starch, called pre-test, was carried out on jumbo rolls with final numbers 21 to 28. Shortly after, the production of rolls with application of MFC in rolls 29 to 31 began. To complete the test, the starch application condition returned to normal and a few more jumbo rolls with starch were produced (rolls 32 to 35), as it is shown in table 3.

**Table 3** - Reels produced during the test of MFC application between layers on corrugated paper with a grammage of 170 g/m$^2$:

| Identification of the produced jumbo rolls | | |
| --- | --- | --- |
| *Pre-test (Starch between layers)* | **Rolls with MFC applied between layers** | *Post-test (Starch between layers)* |
| *146I0521 to 146I0528* | *146I0529 to 146I0531* | *146I0532 to 146I0535* |

The test with industrial application of MFC lasted for 1h and 40 minutes. The application of MFC during the test reached a concentration of 0.7 g/m$^2$, which allows a 5-times reduction of the applied starch load, considering the value of 3.58 g/m$^2$. It is important to note that the MFC flow increased in order to reach the different concentrations of MFC up to 0.7 g/m$^2$, as it is shown in Table 4.

**Table 4** - Average process data during the production of corrugated with grammage of 170 g/m$^2$ and MFC between layers:

| Jumbo rolls with MFC | MP speed (m/min) | SR° degree of the base layer | SR° degree of the medium layer | MFC flow applied (l/min) | Concentration of applied MFC (g/m$^2$) |
| --- | --- | --- | --- | --- | --- |
| *146I0529* | 599.5 | 21.0 | 33.0 | 79.7 | 0.43 |
| *146I0530* | 599.4 | 20.5 | 33.0 | 127.2 | 0.68 |
| *146I0531* | 599.3 | 19.5 | 33.3 | 130.5 | 0.70 |

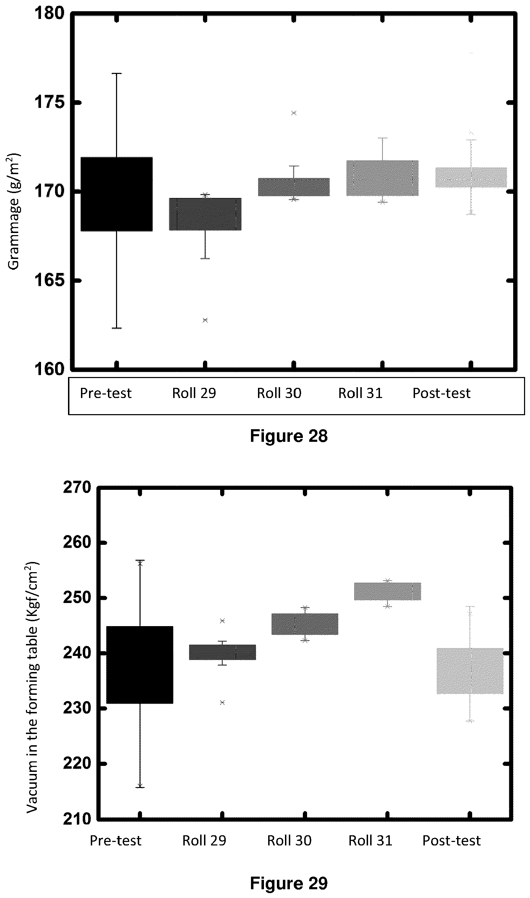

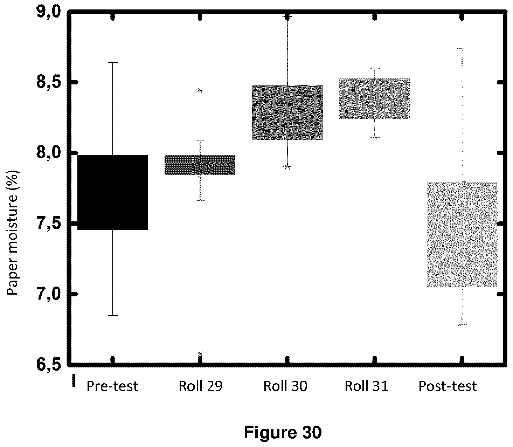

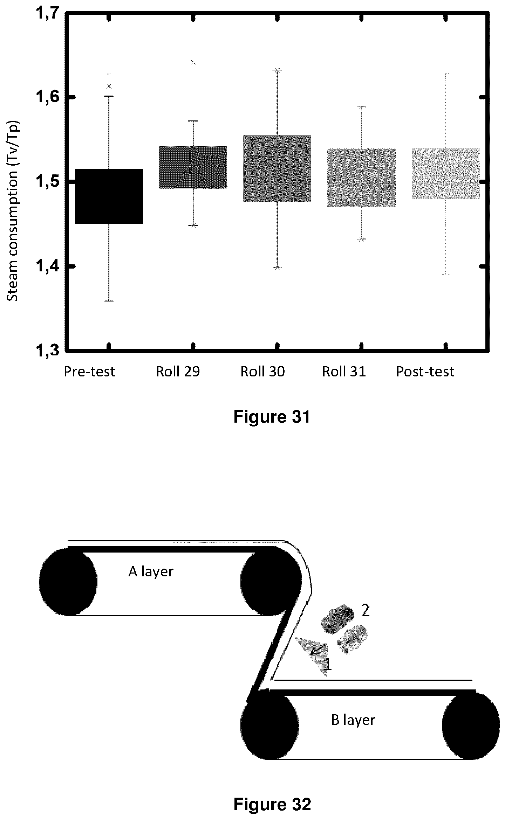

Figures 28 to 31 show tests of useful properties in industrial scale production, such as of grammage (figure 28), vacuum in trivac (integral part of the papermaking machine) (figure 29), paper moisture (figure 30) and steam consumption (figure 31).

The grammage of the paper produced did not show great variation; however, as the concentration of dosed MFC reached 0.7 g/m$^2$ (rolls 30 and 31), a slight increasing trend was observed followed by stabilization. The steam consumption/ton of paper did not show great variation. It is important to note that, as the MFC dosage increased, reaching the maximum applied between layers (0.7 g/m$^2$), the values of moisture and vacuum pressure also showed a growth rate. Thus, it is possible to predict the paper behavior with the MFC dosages applied during the test.

The results of this set of physical tests were satisfactory and met specifications, and were even better in cases of application of the maximum load of MFC between layers (0.7 g/m$^2$) in rolls 30 and 31. It should be noted that some test values for roll 29 are lower, in view that, in this production, the change between starch and MFC between layers occurred, where, beyond that point, the MFC dosage began to rise until reaching the expected values for physical and mechanical tests.

It is important to emphasize that although the physical, chemical and structural characteristics presented in the item referring to MFC characterizations suggest a prominence for long fiber MFC, it can be affirmed that, in the final product performance, both MFCs (short and long fibers) were efficient and, for the application carried out, no significant difference was noticed. However, the physical, chemical and structural characteristics which have the best MFC quality for application on a larger scale should be prioritized, without preventing or otherwise invalidating the use of other MFC-generating feedstocks in the present invention.

Thus, the application of MFC provided 100% replacement of starch between layers without causing quality problems for the paper produced in the reels during the test period. Thus, the application of MFC provides the definition of a new biopolymer, with potential to substitute other additives in paper, and not only starch.

## Examples

The example below aims to report the process of applying MFCs between the paper layers as well as the results of mechanical and physical tests performed before and during the application process.

Example 1

For the production of CFM, bleached or non-bleached kraft pulp, with long and short fibers, is used, which is diluted to 2% and treated using the chemical agents $Al_2(SO_4)_3$ and NaOH to pH 6.0, with subsequent heating at 35-40 °C for 50-60 minutes. Subsequently, this is treated with 125 g/ton of dry pulp of endoglucanase enzymes, in a cowles shaker, for 25 minutes, and the enzymatic action is cut by raising the pH to 13-14 with NaOH at the dosage of approximately 200g per ton of pulp. The treated pulp is passed through a first vertical mill containing conventional aluminum oxide stone without grooves and, then, through a second mill for 7 hours, where it is diluted once again to achieve the consistency of 0.8%, stirred for 60 minutes with the non-cutting blades, filtered through a 0.05 mm filter and stocked to supply the application line of the aspersion/spray nozzles.

Example 2

A spray was used to apply MFC between the paper layers in laboratory to carry out the tests of physical and mechanical characteristics. An constant spray air gun was used to form an application mist and to spray onto the paper surface. The air gun has a container where the prepared MFC suspension is stored, and when it is pressurized by a mechanical trigger, that suspension is sprayed through an application needle having an opening between 0.5 and 10 mm. Upon passing through this opening, the suspension is sprayed onto the paper surface. The layer sprayed onto the paper surface is used for bonding one more layer of paper onto the powdered suspension and paper/base surface set. Together, the two paper layers which may have varied fibrous compositions are bonded by the MFC suspension that has been sprayed between the layers. MFC is generally sprayed at consistencies from 0.1 to 2%.

Example 3

For industrial application, for about 2 hours on the MP14 industrial paper machine, and according to the defined application load, it was possible to reduce by approximately 5 times, the starch loading applied for bonding between the paper layers. As in the laboratory, the MFC slurry was prepared to a known consistency and stored in a tank with a coupled pump, and connected directly to the line of fan and cone-type starch sprinklers/sprayers between the paper layers in the MP14 paper machine. The suspension was pumped at a flow rate of 0 to 200 L/min from the tank to the applicator line, where it was sprayed between the paper layers, creating a spray mist directed between the paper layers or only to one of the layers, depending on the application angle ranging from 0 to 180° (Figure 32). The application of the MFC suspension at the maximum flow rate allowed the replacement of 100% of the starch between the layers previously used for the same purpose.

**Claims**

1.  Multilaminar paper containing cellulosic fibers, **characterized in that** it comprises between 0.5 and 1.5 g/m$^2$ of microfibrillated cellulose fibers between its layers.

2.  Paper, according to claim 1, **characterized in that** it has a final grammage in the range of 60 to 440 g/m$^2$.

3.  Paper, according to claim 1, **characterized in that** the microfibrillated cellulose fibers contain an average diameter of less than 250 nanometers.

4.  Paper, according to claim 1, **characterized in that** it is corrugated or paperboard.

5.  Papermaking process, **characterized in that** it comprises the addition of 0.5 to 1.5 g/m$^2$ of microfibrillated cellulose fibers between the layers of a multilaminar paper.

6.  Process, according to claim 5, **characterized in that** the addition of microfibrillated cellulose between the paper layers is capable of replacing up to 100% of the starch used.

7.  Process, according to claim 5, **characterized by** applying the microfibrillated cellulose fibers between the paper layers at a flow rate of 0 to 200 1/min.

MFC between layers (internal bonding)

**Figure 1**

Figure 2

**Figure 3**

Figure 4

**Figure 5**

**Figure 6**

**Figure 7**

Figure 8

Pulp    Treated pulp    1st grinding    2nd grinding

Figure 9

1st grinding

Figure 10

2$^{nd}$ grinding

**Figure 11**

**Figure 12**

**Figure 13**

Figure 14

Figure 15

**Figure 16**

Figure 17

Figure 18

**Figure 19**

**Figure 20**

**Figure 21**

Figure 22

Figure 23

**Figure 24**

**Figure 25**

**Bursting Resistance**

Figure 26

**Resistance to airflow**

Figure 27

**Figure 28**

**Figure 29**

**Figure 30**

Figure 31

Figure 32

## INTERNATIONAL SEARCH REPORT

| International application No. |
| --- |
| PCT/BR2019/050181 |

**A. CLASSIFICATION OF SUBJECT MATTER**

**IPC: D21H17/25 (2006.01), D21H21/18 (2006.01), B32B29/02 (2006.01), B32B7/12 (2006.01), B82Y30/00 (2011.01)**
**CPC: D21H5/14, D21H1/02, D21H21/18, D21H17/25, B32B2250/26, B32B2260/28, B32B7/12, B32B2307/54, B82Y30/00**

According to International Patent Classification (IPC) or to both national classification and IPC

**B. FIELDS SEARCHED**

Minimum documentation searched (classification system followed by classification symbols)

**D21H; D21F; B32B7**

Documentation searched other than minimum documentation to the extent that such documents are included in the fields searched

**Base Patentária INPI-BR; Google Scholar**

Electronic data base consulted during the international search (name of data base and, where practicable, search terms used)

**Espacenet; Derwent World Patents Index (DWPI)**

**C. DOCUMENTS CONSIDERED TO BE RELEVANT**

| Category* | Citation of document, with indication, where appropriate, of the relevant passages | Relevant to claim No. |
| --- | --- | --- |
| X | WO 2011056135 A1 (STORA ENSO OYJ [FI]) <br><br> 12 May 2011 (12.05.2011) <br> Abstract, claim 2, line 30 from page 8 and line 27 from page 9 of description. | 1-7 |
| X | WO 2017044676 A1 (UNIV OF MAINE SYSTEM BOARD OF TRUSTEES [US]) <br> 16 March 2017 (16.03.2017) <br> Abstract, claim 1 and 2, and paragraphs [0005], [0006], [0027] and [0032] from description. | 1-7 |
| A | WO 2011068457 A1 (STORA ENSO OYJ [FI]) <br> 9 June 2011 (09.06.2011) | 1-7 |
| A | WO 2012039668 A1 (STORA ENSO OYJ [FI]) <br> 29 March 2012 (29.03.2012) | 1-7 |

| ☒ Further documents are listed in the continuation of Box C. | ☒ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 01 July 2019 (01.07.2019) | 17 July 2019 (17.09.2017) |

| Name and mailing address of the ISA/ BR | Authorized officer |
| --- | --- |
| Facsimile No. | Telephone No. |

Form PCT/ISA/210 (second sheet) (January 2015)

**INTERNATIONAL SEARCH REPORT**

| International application No. |
| --- |
| PCT/BR2019/050181 |

C (Continuation).     DOCUMENTS CONSIDERED TO BE RELEVANT

| Category* | Citation of document, with indication, where appropriate, of the relevant passages | Relevant to claim No. |
| --- | --- | --- |
| A | WO 2014029917 A1 (UPM KYMMENE CORPORATION[FI])<br>27 February 2014 (27.02.2014)<br>Cited in the description.<br><br>------------------------------------------- | 1-7 |

Form PCT/ISA/210 (continuation of second sheet) (January 2015)

INTERNATIONAL SEARCH REPORT
Information on patent family members

International application No.
PCT/BR2019/050181

| | | | |
|---|---|---|---|
| WO 2011056135 A1 | 2011-05-12 | BR 112012010610 A2 | 2016-03-22 |
| | | CN 102686802 A | 2012-09-19 |
| | | EP 2496766 A1 | 2012-09-12 |
| | | JP 2013510249 A | 2013-03-21 |
| | | JP 5883393 B2 | 2016-03-15 |
| | | KR 20120091162 A | 2012-08-17 |
| | | NO 2496766 T3 | 2017-12-30 |
| | | US 2012219816 A1 | 2012-08-30 |
| | | US 9175441 B2 | 2015-11-03 |
| WO 2017044676 A1 | 2017-03-16 | CA 2997266 A1 | 2017-03-16 |
| | | EP 3347180 A1 | 2018-07-18 |
| | | US 2017072670 A1 | 2017-03-16 |
| WO 2011068457 A1 | 2011-06-09 | AU 2010327382 A1 | 2012-06-07 |
| | | BR 112012013447 A2 | 2016-04-19 |
| | | CA 2782342 A1 | 2011-06-09 |
| | | CN 102639788 A | 2012-08-15 |
| | | EP 2507432 A1 | 2012-10-10 |
| | | JP 2013513037 A | 2013-04-18 |
| | | NZ 600151 A | 2013-10-25 |
| | | RU 2012127561 A | 2014-01-10 |
| | | SE 0950930 A1 | 2011-06-04 |
| | | SE 535014 C2 | 2012-03-13 |
| | | US 2012241114 A1 | 2012-09-27 |
| | | ZA 201203737 B | 2013-02-27 |
| WO 2012039668 A1 | 2012-03-29 | BR 112013006626 A2 | 2016-06-28 |
| | | CN 103154366 A | 2013-06-12 |
| | | EP 2619367 A1 | 2013-07-31 |
| | | JP 2013537942 A | 2013-10-07 |
| | | SE 1050985 A1 | 2012-03-23 |
| | | US 2013180680 A1 | 2013-07-18 |
| WO 2014029917 A1 | 2014-02-27 | EP 2888405 A1 | 2015-07-01 |
| | | FI 20125868 A | 2014-02-22 |
| | | FI 126083 B | 2016-06-15 |

Form PCT/ISA/210 (patent family annex) (January 2015)

**REFERENCES CITED IN THE DESCRIPTION**

**Patent documents cited in the description**

- WO 2016097964 A
- WO 2016185332 A
- WO 2014029917 A